# EUROPEAN PATENT SPECIFICATION

(11) **EP 0 965 568 B1**
(45) Date of publication and mention of the grant of the patent: **06.10.2004**
(21) Application number: 99111408.3
(22) Date of filing: 11.06.1999
(51) Int. Cl.: C03B 9/16, C03B 9/41, G06F 3/00, H01H 13/70, H01H 13/06, B29C 33/00, B29C 45/14

(54) **Machine for molding glassware**
Maschine zur Herstellung von Glasgegenständen
Machine pour le moulage d'objets en verre

(30) Priority: 19.06.1998 IT TO980533
(43) Date of publication of application: 22.12.1999
(73) Proprietor: BOTTERO S.p.A., 12010 Cuneo (IT)
(72) Inventor: Sesia, Carlo, 12011 Borgo San Dalmazzo (IT); Carenini, Giovanni, 12089 Villanova Di Mondovi' (IT); Borsarelli, Claudio G., 12100 Cuneo (IT)
(74) Representative: Eccetto, Mauro

(56) References cited:
- EP-A- 0 124 892
- EP-A- 0 616 345
- WO-A-93/21593
- DE-A- 19 700 683
- US-A- 3 762 907
- US-A- 3 905 793
- US-A- 3 969 600
- US-A- 4 771 139
- US-A- 5 340 955
- US-A- 5 399 821
- US-A- 5 721 666

## Description

The present invention relates to a machine for molding glassware.

Glassware is known to be molded on so-called I.S. molding machines, which comprise a supply assembly for supplying a succession of glass gobs; and a number of molding sections, each comprising a respective group of molds, and each for receiving respective glass gobs from the supply assembly and successively forming respective glass articles. More specifically, the supply assembly comprises an extrusion assembly for forming a bead of molten glass; a scissor cutting assembly for cutting the bead transversely into successive glass gobs; a gob distributor for receiving the gobs from the cutting assembly; and, for each group of molds, a respective gob delivery assembly for receiving the glass gobs from the distributor and feeding the gobs to the respective molds.

Once formed inside the respective molds, the articles are extracted from the molds by respective actuator assemblies, which transfer the articles from the respective molds to a common conveyor by which the articles are fed to an annealing furnace.

The extrusion assembly, cutting assembly, gob distributor and actuating assemblies are controlled and synchronized by an electronic control unit comprising a central control unit and, for each section, a respective machine-operator push-button panel located close to the respective group of molds. Each push-button panel normally comprises a respective frame, and a number of separate push-buttons with respective casings connected to the frame and partially housing respective movable-contact actuating elements projecting from the respective casings. In most applications, the push-buttons are protected by a common shield normally made of deformable, transparent plastic material and connected in fluidtight manner to the frame.

Though fairly dustproof and resistant, in general, to carbon contaminants in the vicinity of the molding machine, known push-button panels of the above type do not permit thorough cleaning of the machine, for example, using hydrocleaners and/or specific detergents. The protective shields, if any, and the seals normally used on known push-buttons, in fact, are incapable of adequately withstanding either jets of compressed liquid directed onto the push-button panel, as when using hydrocleaners, or currently marketed detergents which, as is known, provide for such thorough degreasing and cleaning as at times to corrode and, within a relatively short space to time, impair operation of the push-button seals and protective shields. Moreover, being of poor heat resistance, known push-button panels cannot be operated by tools or equipment - which, normally being located close to the molds, are relatively hot and, at times, red-hot - and in any case must be protected against impact by external bodies which could result in irreparable damage. Push-button panel of the kind disclosed above is disclosed in US 5.340.955

Despite improving protection against external agents, the protective shields are poorly tolerated by machine operators, who are normally forced to work wearing special gloves, which in themselves hinder operation of the push-buttons, and who see the protective shields as yet a further hindrance.

It is an object of the present invention to provide a machine for molding glassware, the push-button panels of which are designed to eliminate the aforementioned drawbacks in a straightforward, low-cost manner.

According to the present invention, there is provided a machine for molding glassware as claimed in claim 1.

According the present invention, there is also provided a push-button panel as claimed in Claim 8.

A non-limiting embodiment of the invention will be described by way of example with reference to the accompanying drawings, in which:
Figure 1 shows a schematic view in perspective of a preferred embodiment of a machine for molding glassware in accordance with the teachings of the present invention;
Figure 2 shows a considerably larger-scale section along line II-II in Figure 1;
Figure 3 shows the same view as in Figure 2, of a variation of a detail in Figure 2;
Figure 4 shows a schematic block diagram of a control assembly of the Figure 1 machine.

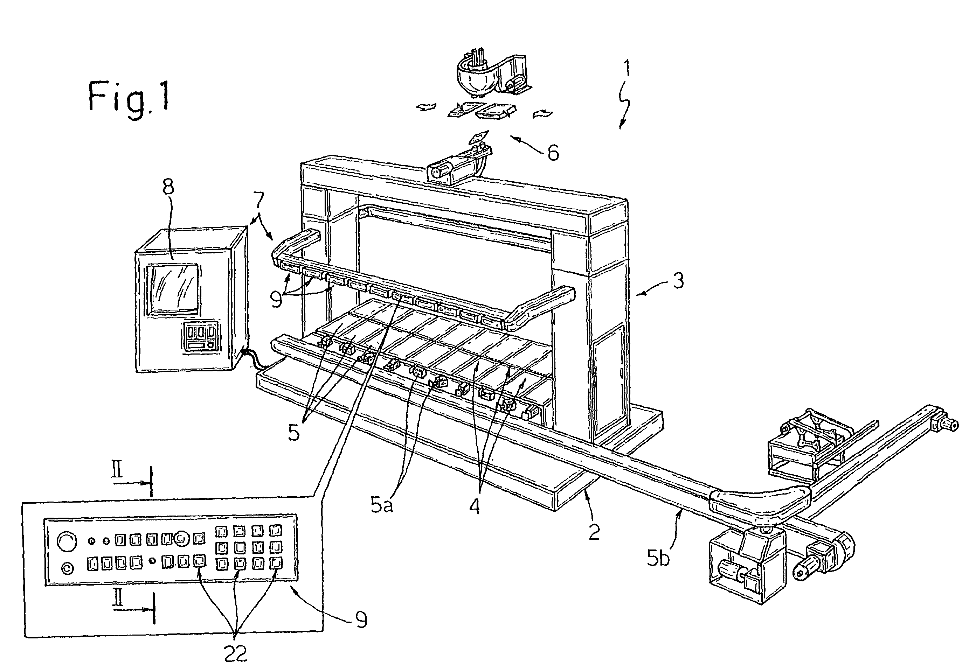

Number 1 in Figure 1 indicates as a whole a machine for producing glassware and comprising a base 2, a gantry-type frame 3 extending from base 2, and a number of molding sections 4 (shown schematically) for molding respective glass articles (not shown). More specifically, each section 4 comprises a respective known group of molds 5 (not described in detail) for forming, in succession, a number of glass articles from respective glass gobs (not shown) supplied by a supply assembly 6; and a respective manipulating device 5a for removing the articles from the respective group of molds and feeding the articles onto a conveyor 5b by which the articles are fed to an annealing furnace (not shown).

Again with reference to Figure 1, machine 1 is controlled by a respective electronic control unit 7 comprising a known electronic central control unit 8 and, for each section 4, a respective sealed push-button panel 9 which, in the particular example described, is supported by frame 3 over and adjacent to base 2, and by which machine 1 is operator-controlled manually to disable and/or make changes to the production cycles performed by the machine under the control of electronic central control unit 8.

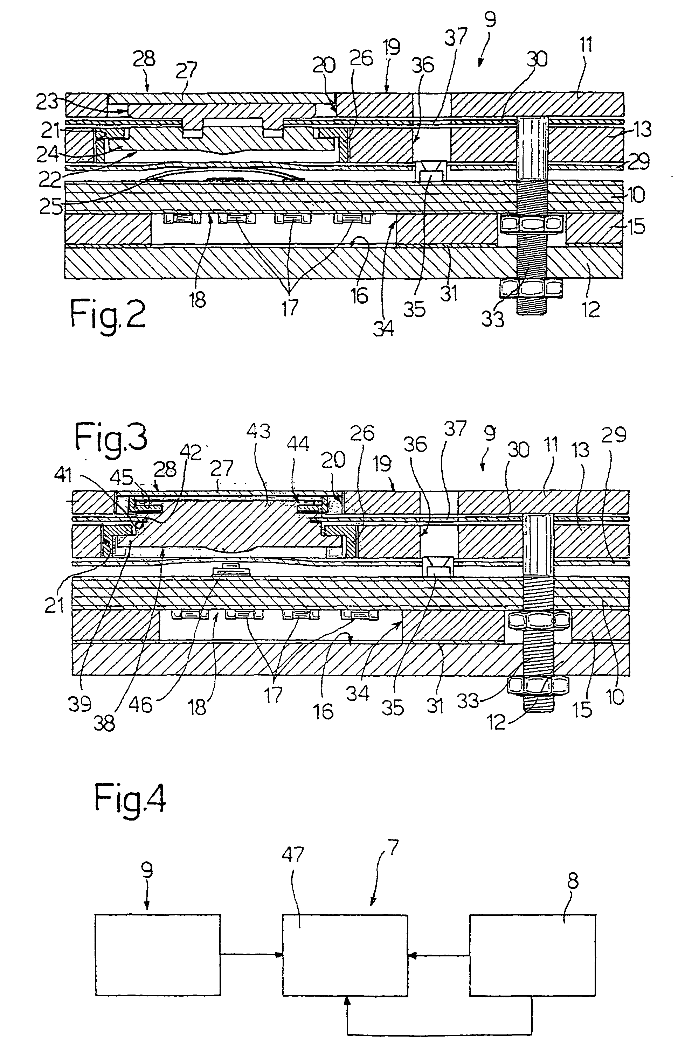

As shown in Figure 1 and particularly in Figure 2, each push-button panel 9 comprises a printed-circuit board 10; a front cover plate 11 and a rear closing plate 12 parallel to each other and to board 10 and located on opposite sides of board 10; and an intermediate plate 13 extending between board 10 and cover plate 11.

Board 10 and rear plate 12 are separated by a spacer element 15 which, together with board 10 and rear plate 12, defines a cavity 16 (shown partly in Figure 2) housing a number of known components 17, such as diodes, resistors, etc., soldered directly onto the surface 18 of board 10 and facing plate 12.

Again with reference to Figure 2, cover plate 11 is defined externally by a flat surface 19, and comprises a number of through openings 20, each of which extends at a respective through opening 21 in intermediate plate 13 and defines, together with respective opening 21, a seat for housing a respective known push-button 22. In the example shown in Figure 2, each push-button 22 comprises a fixed annular guide body 26 engaging opening 21; and two movable bodies 23 and 24 connected, preferably glued, integrally with each other. Body 24 is connected in sliding manner to annular guide body 26 and acts, in use, on a known dome-shaped switch 25 of the printed circuit; and body 23 engages opening 20 and is fitted with an outer plate 27 identifying the respective push-button 22, and the outer surface 28 of which is substantially coplanar with surface 19 of plate 11.

Again with reference to Figure 2, each push-button panel 9 also comprises a sheet 29 of insulating material, preferably a material known as "Mylar", interposed between intermediate plate 13 and board 10; and two seals 30 and 31 preferably made of nitrile or silicone rubber. Seal 30 extends between plates 11 and 13 and is gripped between bodies 23 and 24; and seal 31 extends between closing plate 12 and spacer element 15. Plates 11, 12, 13, seals 30, 31 and spacer element 15 are gripped together by a number of screws 33 - only one of which is shown in Figure 2 - to define a sealed chamber 34 for housing board 10, relative components 17 and a number of metal actuators 25.

Chamber 34 also houses a number of light sources 35 resting on the opposite surface of board 10 to surface 18 and each soldered directly onto board 10 at the inlet of a conduit 36 extending through plates 11 and 13 and crossed by a transparent partition 37 preferably defined by an intermediate portion of seal 30.

In the Figure 3 variation, each push-button 22 is replaced by a push-button 38, which differs from push-buttons 22 by comprising a movable body 39, which is formed in one piece, extends through openings 20 and 21, and is connected to annular guide body 26 in an angularly fixed position and so as to slide to and from board 10. Body 39 comprises an outer circumferential groove 41 housing a respective annular portion 42 of seal 30, and comprises an end portion 43 extending through opening 20 and fitted releasably - preferably by means of a bayonet joint 44 - with a disk-shaped body 45 loosely engaging opening 20 and fitted integrally with respective identification plate 27 which, together with respective body 45, forms part of push-button 38.

In the Figure 3 variation, dome-shaped switches 25 of the printed circuit are each replaced by a known miniaturized sealed switch 46 (not described in detail) also soldered to board 10.

As shown in Figure 4, the push-buttons defining push-button panels 9 are connected to central control unit 8 in such a way as to define a controllable switching matrix 47. That is, by programming matrix 47, each function enabled/disabled by the push-button panel may be associated with any one of push-buttons 22 of push-button panels 9 so that the position of push-button 22 on the push-button panel is not related to the function enabled/disabled by operating the push-button.

As compared with known push-button panels, push-button panels 9 as described are therefore highly resistant not only to dust and contaminants in the vicinity of machine 1, but also to any type of liquid detergent used to clean the machine. Printed-circuit board 10, components 17 on board 10, switches 25 and light sources 35, in fact, are housed inside a fully sealed chamber and therefore permanently isolated from the outside, so that machine 1 can be cleaned by hydrocleaners using any type of liquid detergent, and push-button panels 9 treated, i.e. subjected to thorough cleaning, in the same way as groups of molds 5 or frame 3. Moreover, cleaning is further simplified by push-buttons 22, unlike known push-buttons, no longer projecting but forming part of a perfectly flat, and therefore easy-to-clean, outer surface. As such, push-button panels 9 no longer require additional protective shields, which not only makes cleaning easier but also simplifies operation of the push-buttons, even by machine operators wearing protective gloves.

Using straightforward plates and only one pair of seals gripped between the plates makes push-button panels 9 extremely easy to manufacture and assemble on the machine, thus greatly reducing cost.

The construction characteristics of push-button panels 9 described, and in particular the presence of plates 11, 12 and 27, make the push-button panels practically shockproof and unaffected by any means used to operate them. Tests have shown push-button panels 9 as described to be highly heat-resistant and therefore locatable, with substantially no problems, in environments formerly avoided by being particularly hostile, also in terms of temperature.

The possibility of assigning any push-button to any panel-controlled function provides for "customizing" the push-button panels, i.e. enabling different users to perform each function using push-buttons located in positions selectable according to specific requirements. Customizing the push-button panels is also further simplified by identification plates 27 being interchangeable easily and relatively quickly, especially by virtue of bayonet joints 44.

Clearly, changes may be made to push-button panels 9 as described herein without, however, departing from the scope of the present invention. In particular, push-buttons 22 may be formed differently from those described by way of example; different solutions may be adopted for sealed chamber 34 housing board 10, components 17, switches 25, 46 and light sources 35; light sources 35 may even be dispensed with or located differently from those shown by way of example; and insulating sheet 29 may be made of material other than that indicated and/or may be replaced by or associated with a further seal to define, together with seal 31, a further sealed chamber inside sealed chamber 34.

## Claims

1. A machine (1) for molding glassware, the machine comprising a number of molding sections (4), each for successively molding a number of glass articles; and control means (7) for controlling said sections (4) and comprising, for each said section (4), at least one push-button panel (9) comprising a number of push-buttons (22; 38), an outer cover plate (11) surrounding said push-buttons (22; 38); a printed circuit (10) supporting a number of components (17); for each said push-button (22; 38), switching means (25; 46) associated with said printed circuit (10); an outer closing plate (12) located on the opposite side of said printed circuit (10) with respect to said outer cover plate (11), and first (30) sealing means disposed between the outer cover plate (11) and the printed circuit (10) and spaced away from the printed circuit (10); **characterized in that** it further comprises a second sealing means (31) located on opposite side of said printed circuit (10), said components (17) and said switching means (25; 46) with respect to the first (30) sealing means and faced to the said outer closing plate (12) to form together with the first sealing means (30) a sealed chamber (34) for housing said printed circuit (10), the relative components (17) and said switching means (25; 46); said second sealing means comprising a layer (31) of nitrile or silicone rubber and being spaced away from said printed circuit by a spacer element (15) to define said sealed chamber.

2. A machine as claimed in Claim 1, **characterized in that** each said push-button (22) comprises an outer end portion (23) at least partly surrounded by said outer cover plate (11) and defined by an outer surface (28) substantially coplanar with an outer surface (19) of said outer cover plate (11).

3. A machine as claimed in Claim 2, **characterized by** also comprising spacing means (15) interposed between said printed circuit (10) and said outer closing plate (12); said second sealing means (31) being interposed between said spacing means (15) and said outer closing plate (12).

4. A machine as claimed in Claim 3, **characterized in that** said push-button panel (9) further comprises releasable forcing means (33) to grip together said outer cover plate (11), said outer closing plate (12), said spacing means (15) and said first and second sealing means (30) (31).

5. A machine as claimed in any one of the foregoing Claim, **characterized in that** each said push-button (38) comprises a single actuating body (39) acting on the relative said switching means (25; 46); an outer plate (27) identifying the push-button (38); and releasable connecting means (44, 45) interposed between said actuating body (39) and said outer plate (27).

6. A machine as claimed in Claim 5, **characterized in that** said connecting means (44, 45) comprise a bayonet joint (44).

7. A machine as claimed in any one of the foregoing Claims, **characterized in that** said control means (7) also comprises an electronic control unit (8); and controllable switching means (47) interposed between said push-button panels (9) and said electronic control unit (8) to assign each said push-button (22; 38) any one of the functions enabled/disabled by said push-button panels (9).

8. A push-button panel (9), particularly for a machine (1) for molding glassware, comprising a number of push-buttons (22; 38), an outer cover plate (11) surrounding said push-buttons (22; 38); a printed circuit (10) supporting a number of components (17); for each said push-button (22; 38), switching means (25; 46) associated with said printed circuit (10); an outer closing plate (12) located on the opposite side of said printed circuit (10) with respect to said outer cover plate (11), and first (30) sealing means disposed between the outer cover plate (11) and the printed circuit (10) and spaced away from the printed circuit (10); **characterized in that** it further comprises a second sealing means (31) located on opposite side of said printed circuit (10), said components (17) and said switching means (25; 46) with respect to the first (30) sealing means and faced to the said outer closing plate (12) to form together with the first sealing means (30) a sealed chamber (34) for housing said printed circuit (10), the relative components (17) and said switching means (25; 46); said second sealing means comprising a layer (31) of nitrile or silicone rubber and being spaced away from said printed circuit by a spacer element (15) to define said sealed chamber.

9. A push-button panel as claimed in Claim 8, **characterized in that** each said push-button (22) comprises an outer end portion (23) at least partly surrounded by said outer cover plate (11) and defined by an outer surface (28) substantially coplanar with an outer surface (19) of said outer cover plate (11).

10. A push-button panel as claimed in Claim 8 or 9, **characterized by** also comprising spacing means (15) interposed between said printed circuit (10) and said outer closing plate (12), said second sealing means (31) being interposed between said spacing means (15) and said outer closing plate (12).

11. A push-button panel as claimed in Claim 10, **characterized in that** it further comprises releasable forcing means (33) to grip together said outer cover plate (11), said outer closing plate (12), said spacing means (15) and said first and second sealing means (30) (31).

12. A push button panel as claimed in Claim 11, **characterized in that** said releasable forcing means comprises at least a screw nut-screw assembly.

13. A push-button panel as claimed in any one of Claims 8 to 12, **characterized in that** each said push-button (38) comprises a single actuating body (39) acting on the relative said switching means (25; 46); an outer plate (27) identifying the push-button (38); and releasable connecting means (44, 45) interposed between said actuating body (39) and said outer plate (27).

14. A push-button panel as claimed in Claim 13, **characterized in that** said connecting means (44, 45) comprise a bayonet joint (44).

## Patentansprüche

1. Maschine (1) zum Formen von Glasgegenständen, wobei die Maschine aufweist: eine Anzahl von Formungsabschnitten (4), jeder zur aufeinanderfolgenden Formung von einer Anzahl von Glasartikeln; und eine Steuereinrichtung (7) zur Steuerung der Abschnitte (4), die für jeden dieser Abschnitte (4) zumindest ein Druckknopf-Tableau (9) mit einer Anzahl von Druckknöpfen (22; 38) aufweist, wobei eine äußere Deckplatte (11) die Druckknöpfe (22; 38) umgibt; eine gedruckte Schaltung (10), die eine Anzahl von Bauteilen (17) trägt; für jeden genannten Druckknopf (22; 38) eine Schalteinrichtung (25; 46), die mit der gedruckten Schaltung (10) in Verbindung steht; eine äußere Abdeckplatte (12), die hinsichtlich der äußeren Deckplatte (11) an der entgegengesetzten Seite der gedruckten Schaltung (10) lokalisiert ist, und eine erste Dichteinrichtung, die zwischen der äußeren Deckplatte (11) und der gedruckten Schaltung (10) angeordnet ist und von der gedruckten Schaltung (10) beabstandet ist; **dadurch gekennzeichnet, dass** sie weiterhin eine zweite Dichteinrichtung (31) aufweist, die an der entgegengesetzten Seite der gedruckten Schaltung (10), der Bauteile (17) und der Schalteinrichtung (25; 46) bezüglich der ersten (30) Dichteinrichtung liegt und in Richtung auf die äußere Abdeckplatte (12) zeigt, um zusammen mit der ersten Dichteinrichtung (30) eine abgedichtete Kammer (34) zur Aufnahme der gedruckten Schaltung (10), der damit in Zusammenhang stehenden Bauteile (17) und der Schalteinrichtung (25; 46) zu bilden, wobei die zweite Dichteinrichtung eine Schicht (31) von Nitril- oder Silikonkautschuk aufweist und von der gedruckten Schaltung durch ein Beabstandungselement (15) beabstandet ist, um die abgedichtete Kammer zu begrenzen.

2. Maschine nach Anspruch 1, **dadurch gekennzeichnet, dass** jeder Druckknopf (22) einen äußeren Endabschnitt (23) aufweist, der zumindest teilweise von der äußeren Deckplatte (11) umgeben ist und von einer äußeren Fläche (28) begrenzt ist, die im Wesentlichen koplanar mit der äußeren Fläche (19) der äußeren Abdeckplatte (11) verläuft.

3. Maschine nach Anspruch 2, **dadurch gekennzeichnet, dass** sie auch eine Beabstandungseinrichtung (15) aufweist, die zwischen der gedruckten Schaltung (10) und der äußeren Abdeckplatte (12) eingefügt ist; wobei die zweite Dichteinrichtung (31) zwischen der Beabstandungseinrichtung (15) und der äußeren Abdeckplatte (12) eingefügt ist.

4. Maschine nach Anspruch 3, **dadurch gekennzeichnet, dass** das Druckknopf-Tableau (9) weiterhin eine lösbare Zwangskrafteinrichtung (33) aufweist, um die äußere Deckplatte (11), die äußere Abdeckplatte (12), die Beabstandungseinrichtung (15) und die erste und zweite Dichteinrichtung (30), (31) zusammen zu halten.

5. Maschine nach einem der vorhergehenden Ansprüche, **dadurch gekennzeichnet, dass** jeder genannte Druckknopf (38) einen einzigen Betätigungskörper (39), der auf die entsprechende genannte Schalteinrichtung (25; 46) einwirkt; eine äußere Platte (27), die den Druckknopf (38) identifiziert; und eine lösbare Verbindungseinrichtung (44, 45), die zwischen dem Betätigungskörper (39) und der äußeren Platte (27) eingefügt ist, aufweist.

6. Maschine nach Anspruch 5, **dadurch gekennzeichnet, dass** die Verbindungseinrichtung (44, 45) eine Bajonett-Verbindung (44) aufweist.

7. Maschine nach einem der vorhergehenden Ansprüche, **dadurch gekennzeichnet, dass** die Steuereinrichtung (7) auch eine elektronische Steuereinheit (8) aufweist und eine steuerbare Schaltvorrichtung (47), die zwischen den Druckknopf-Tableaus (9) und der elektronischen Steuereinheit (8) eingefügt ist, um jedem Druckknopf (22; 38) eine der Funktionen zuzuordnen, die durch die Druckknopf-Tableaus (9) eingeschaltet/ausgeschaltet sind.

8. Druckknopf-Tableau (9), insbesondere für eine Maschine (1) zum Formen von Glasgegenständen, das aufweist: eine Anzahl von Druckknöpfen (22; 38), eine äußere Deckplatte (11), die die Druckknöpfe (22; 38) umgibt; eine gedruckte Schaltung (10), die eine Anzahl von Bauteilen (17) trägt; für jeden der Druckknöpfe (22; 38), eine Schalteinrichtung (25; 46), die mit der gedruckten Schaltung (10) in Verbindung steht; eine äußere Abdeckplatte (12), die an der entgegengesetzten Seite der gedruckten Schaltung (10) hinsichtlich der äußeren Deckplatte (11) angeordnet ist, und eine erste Dichteinrichtung (30), die zwischen der äußeren Deckplatte (11) und der gedruckten Schaltung (10) angeordnet ist und von der gedruckten Schaltung (10) beabstandet ist; **dadurch gekennzeichnet, dass** es weiterhin eine zweite Dichteinrichtung (31) aufweist, die auf der entgegengesetzten Seite der gedruckten Schaltung (10), der Bauteile (17) und der Schalteinrichtung (25; 46) hinsichtlich der ersten (30) Dichteinrichtung angeordnet ist und mit der Front auf die äußere Dichtplatte (12) zeigt, um zusammen mit der ersten Dichteinrichtung (30) eine abgedichtete Kammer (34) zu bilden zum Aufnehmen der gedruckten Schaltung (10), der entsprechenden Bauteile (17) und der Schalteinrichtungen (25; 46); wobei die zweite Dichteinrichtung eine Schicht (31) von Nitril- oder Silikonkautschuk aufweist und von der gedruckten Schaltung durch ein Beabstandungselement (15) beabstandet ist, um die abgedichtete Kammer zu begrenzen.

9. Druckknopf-Tableau nach Anspruch 8, **dadurch gekennzeichnet, dass** jeder Druckknopf (22) einen äußeren Endabschnitt (23) aufweist, der zumindest teilweise von der äußeren Abdeckplatte (11) umgeben ist und durch eine äußere Fläche (28) begrenzt wird, die im Wesentlichen koplanar mit einer äußeren Fläche (19) der äußeren Deckplatte (11) ist.

10. Druckknopf-Tableau nach Anspruch 8 oder 9, **dadurch gekennzeichnet, dass** es auch eine Beabstandungseinrichtung (15 ) aufweist, die zwischen der gedruckten Schaltung (10) und äußeren Abdeckplatte (12) eingefügt ist, wobei die zweite Dichteinrichtung (31) zwischen der Beabstandungseinrichtung (15) und der äußeren Abdeckplatte (12) eingefügt ist.

11. Druckknopf-Tableau nach Anspruch 10, **dadurch gekennzeichnet, dass** es weiterhin ein lösbares Zwangskraftmittel (33) aufweist, um die äußere Deckplatte (11), die äußere Abdeckplatte (12), die Beabstandungseinrichtung (15) und die erste und zweite Dichteinrichtung (30) (31) zusammen zu klemmen.

12. Druckknopf-Tableau nach Anspruch 11, **dadurch gekennzeichnet, dass** das lösbare Zwangskraftmittel zumindest eine Schraubenmutter-Schrauben-Kombination aufweist.

13. Druckknopf-Tableau nach einem der Ansprüche 8 bis 12, **dadurch gekennzeichnet, dass** jeder Druckknopf (38) aufweist; einen einzigen Betätigungskörper (39), der auf die entsprechende Schalteinrichtung (25; 46) einwirkt; eine äußere Platte (27), die den Druckknopf (38) identifiziert; und eine lösbare Verbindungseinrichtung (44, 45), die zwischen dem Betätigungskörper (39) und der äußeren Platte (27) eingefügt ist.

14. Druckknopf-Tableau nach Anspruch 13, **dadurch gekennzeichnet, dass** die Verbindungseinrichtung (44, 45) eine Bajonett-Verbindung aufweist.

## Revendications

1. Machine (1) pour mouler de la verrerie, la machine comprenant plusieurs sections de moulage (4), pour mouler chacune successivement plusieurs articles en verre; et des moyens de commande (7) pour commander lesdites sections (4) et comprenant pour chaque section (4), au moins un panneau à boutons-poussoirs (9) comprenant plusieurs boutons-poussoirs (22; 38), une plaque de couverture extérieure (11) entourant lesdits boutons-poussoirs (22, 38); un circuit imprimé (10) supportant plusieurs composants (17); des moyens de commutation (25; 46) associés audit circuit imprimé (10) pour chaque bouton-poussoir (22; 38); une plaque de fermeture extérieure (12) disposée sur le côté opposé dudit circuit imprimé (10) par rapport à ladite plaque de couverture extérieure (11), et des premiers moyens d'obturation (30) disposés entre la plaque de couverture (11) et le circuit imprimé (10) et éloignés du circuit imprimé (10) ; **caractérisée en ce qu'**elle comprend en outre des seconds moyens d'obturation (31) disposés sur le côté opposé dudit circuit imprimé (10), desdits composants (17) et desdits moyens de commutation (25; 46) par rapport aux premiers moyens d'obturation (30) et faisant face à ladite plaque de fermeture extérieure (12) pour former ensemble avec lesdits premiers moyens d'obturation (30) une chambre fermée (34) pour loger ledit circuit imprimé (10), les composants (17) relatifs à ce circuit et lesdits moyens de commutation (25 ; 46); lesdits seconds moyens d'obturation comprenant une couche (31) de nitrile ou de caoutchouc de silicone et étant éloignés dudit circuit imprimé par un élément d'espacement (15) pour définir ladite chambre fermée.

2. Machine telle que revendiquée dans la revendication 1, **caractérisée en ce que** chaque bouton-poussoir (22) comprend une partie d'extrémité extérieure (23) au moins partiellement entourée par ladite plaque de couverture extérieure (11) et définie par une surface extérieure (28) sensiblement coplanaire avec une surface extérieure (19) de ladite plaque de couverture (11).

3. Machine telle que revendiquée dans la revendication 2, **caractérisée en ce qu'**elle comprend également des moyens d'espacement (15) interposés entre ledit circuit imprimé (10) et ladite plaque de fermeture extérieure (12) ; lesdits seconds moyens d'obturation (31) étant interposés entre lesdits moyens d'espacement (15) et ladite plaque de fermeture extérieure (12).

4. Machine telle que revendiquée dans la revendication 3, **caractérisée en ce que** ledit panneau à boutons-poussoirs (9) comprend en outre des moyens de serrage libérables pour serrer ensemble ladite plaque de couverture extérieure (11), ladite plaque de fermeture extérieure (12), lesdits moyens d'espacement (15) et lesdits premiers et seconds moyens d'obturation (30 (31).

5. Machine telle que revendiquée dans l'une quelconque des revendications précédentes, **caractérisée en ce que** chaque bouton-poussoir (38) comprend un corps d'activation unique (39) agissant sur lesdits moyens de commutation (25; 46) relatifs; une plaque extérieure (27) identifiant le bouton-poussoir (38); et des moyens de connexion (44, 45) libérables interposés entre ledit corps d'activation (39) et ladite plaque extérieure (27).

6. Machine telle que revendiquée dans la revendication 5, **caractérisée en ce que** lesdits moyens de connexion (44, 45) comprennent un joint en baïonnette (44).

7. Machine telle que revendiquée dans l'une quelconque des revendications précédentes, **caractérisée en ce que** lesdits moyens de commande (7) comprennent également une unité de commande électronique (8); et des moyens de commutation contrôlables (47) interposés entre lesdits panneaux à boutons-poussoirs (9) et ladite unité de commande électronique (8) pour assigner à chaque bouton-poussoir (22; 38) une quelconque des fonctions activé/désactivé par lesdits panneaux à boutons-poussoirs (9).

8. Panneau à boutons-poussoirs (9), particulièrement pour une machine (1) pour mouler de la verrerie, comprenant plusieurs boutons-poussoirs (22; 38), une plaque de couverture extérieure (11) entourant lesdits boutons-poussoirs (22, 38); un circuit imprimé (10) supportant plusieurs composants (17); des moyens de commutation (25; 46) associé audit circuit imprimé (10) pour chaque bouton-poussoir (22; 38); une plaque de fermeture extérieure (12) disposée sur le côté opposé dudit circuit imprimé (10) par rapport à ladite plaque de couverture extérieure (11), et des premiers moyens d'obturation (30) disposés entre la plaque de couverture (11) et le circuit imprimé (10) et éloignés du circuit imprimé (10); **caractérisé en ce qu'**il comprend en outre des seconds moyens d'obturation (31) disposés sur le côté opposé dudit circuit imprimé (10), desdits composants (17) et desdits moyens de commutation (25; 46) par rapport aux premiers moyens d'obturation (30) et faisant face à ladite plaque de fermeture extérieure (12) pour former ensemble avec lesdits premiers moyens d'obturation (30) une chambre fermée (34) pour loger ledit circuit imprimé (10), les composants (17) relatifs à ce circuit et lesdits moyens de commutation (25; 46); lesdits seconds moyens d'obturation comprenant une couche (31) de nitrile ou de caoutchouc de silicone et étant éloignés dudit circuit imprimé par un élément d'espacement (15) pour définir ladite chambre fermée.

9. Panneau à boutons-poussoirs tel que revendiqué dans la revendication 8, **caractérisé en ce que** chaque bouton-poussoir (22) comprend une partie d'extrémité extérieure (23) au moins partiellement entourée par ladite plaque de couverture extérieure (11) et définie par une surface extérieure (28) sensiblement coplanaire avec une surface extérieure (19) de ladite plaque de couverture (11).

10. Panneau à boutons-poussoirs tel que revendiqué dans la revendication 8 ou 9, **caractérisé en ce qu'**il comporte également des moyens d'espacement (15) interposés entre ledit circuit imprimé (10) et ladite plaque de fermeture extérieure (12) ; lesdits seconds moyens d'obturation (31) étant interposés entre lesdits moyens d'espacement (15) et ladite plaque de fermeture extérieure (12).

11. Panneau à boutons-poussoirs tel que revendiqué dans la revendication 10, **caractérisé en ce qu'**il comporte en outre des moyens de serrage libérables (33) pour serrer ensemble ladite plaque de couverture extérieure (11), ladite plaque de fermeture extérieure (12), lesdits moyens d'espacement (15) et lesdits premiers et seconds moyens d'obturation (30 (31).

12. Panneau à boutons-poussoirs tel que revendiqué dans la revendication 11, **caractérisé en ce que** lesdits moyens de serrage libérables comprennent au moins un ensemble vis boulon-vis.

13. Panneau à boutons-poussoirs tel que revendiqué dans l'une quelconque des revendications 8 à 12, **caractérisé en ce que** chaque bouton-poussoir (38) comprend un corps d'activation unique (39) agissant sur lesdits moyens de commutation (25; 46) relatifs; une plaque extérieure (27) identifiant le bouton-poussoir (38); et des moyens de connexion libérables (44, 45) interposés entre ledit corps d'activation (39) et ladite plaque extérieure (27).

14. Panneau à boutons-poussoirs tel que revendiqué dans la revendication 13, **caractérisé en ce que** lesdits moyens de connexion (44, 45) comprennent un joint en baïonnette.
